Europäisches Patentamt

European Patent Office

Office européen des brevets

(11) Veröffentlichungsnummer: **0 222 968 B1**

# EUROPÄISCHE PATENTSCHRIFT

(45) Veröffentlichungstag der Patentschrift: **13.03.91**

(51) Int. Cl.⁵: **E21D 11/38, F16L 9/22**

(21) Anmeldenummer: **86104572.2**

(22) Anmeldetag: **03.04.86**

(54) **Dichtungsprofil für Segmente von Tunnelröhren.**

(30) Priorität: **15.11.85 DE 3540494**

(43) Veröffentlichungstag der Anmeldung:
**27.05.87 Patentblatt 87/22**

(45) Bekanntmachung des Hinweises auf die
Patenterteilung:
**13.03.91 Patentblatt 91/11**

(84) Benannte Vertragsstaaten:
**AT BE CH DE IT LI LU NL SE**

(56) Entgegenhaltungen:
**DE-A- 2 513 365**
**DE-A- 2 833 345**
**DE-U- 8 502 036**
**DE-U- 8 521 068**
**GB-A- 2 017 194**

(73) Patentinhaber: **PHOENIX AKTIENGESELL-
SCHAFT**
**Hannoversche Strasse 88**
**W-2100 Hamburg 90(DE)**

(72) Erfinder: **Glang, Siegfried**
**Bredengrund 24a**
**W-2104 Hamburg 92(DE)**

## Beschreibung

Die Erfindung bezieht sich auf ein Dichtungsprofil gemäß dem Oberbegriff des Anspruchs 1.

Derartige Dichtungsprofile sind bekannt (DE-A 28 33 345, DE-U 85 02 036, DE-U 85 21 068) und haben sich für den Tunnelbau bei der Verwendung von Segmenten (Tübbings) aus Beton, Gußeisen oder Stahl bewährt. Die wesentlichen Anforderungen an ein solches Profil sind:

1) günstiges Kraft-Weg-Verhalten beim Zusammenpressen der Segmente
2) sichere Verklebung innerhalb der Nut der Segmente
3) möglichst große Berührungsflächen
4) Quell-, Witterungs- und Chemikalienbeständigkeit

Je nach Tiefe und Breite der Nut und je nach Abstand der Segmente im unbelasteten bzw. im belasteten Zustand sowie je nach Profildicke werden besondere Anforderungen an das Kraft-Weg-Verhalten des Profiles gestellt. Dabei sind bisher die Dimensionen (A) üblich gewesen.

| | A (mm) | B (mm) |
|---|---|---|
| Nutenbreite (Basisseite des Profils | 33 | 25 |
| Nutentiefe | 10 | 10 |
| Abstand der Segmente (unbelastet) | 9 | 13 |
| Abstand der Segmente (belastet) | 0 bis 4 | 0 bis 10 |
| Profildicke | 14,5 | 16,5 |

Werden nun andere Dimensionen gefordert (B), wobei die Nutenbreite geringer, die Profildicke und der Abstand der Segmente im unbelasteten bzw. im belasteten Zustand größer ist als bei (A), so ist im Hinblick auf das veränderte Kraft-Weg-Verhalten eine Weiterentwicklung der bisher bekannten Profile unausweichlich.

Aufgabe der Erfindung ist es daher, ein Dichtungsprofil für Segmente von Tunnelröhren zu entwickeln, das unabhängig von der Dimensionierung ein günstiges Kraft-Weg-Verhalten beim Zusammenpressen der Segmente aufweist.

Die Aufgabe wird durch die Erfindung nach Anspruch 1 gelöst.

Weitere zweckmäßige Ausgestaltungen der Erfindung sind in den Unteransprüchen genannt.

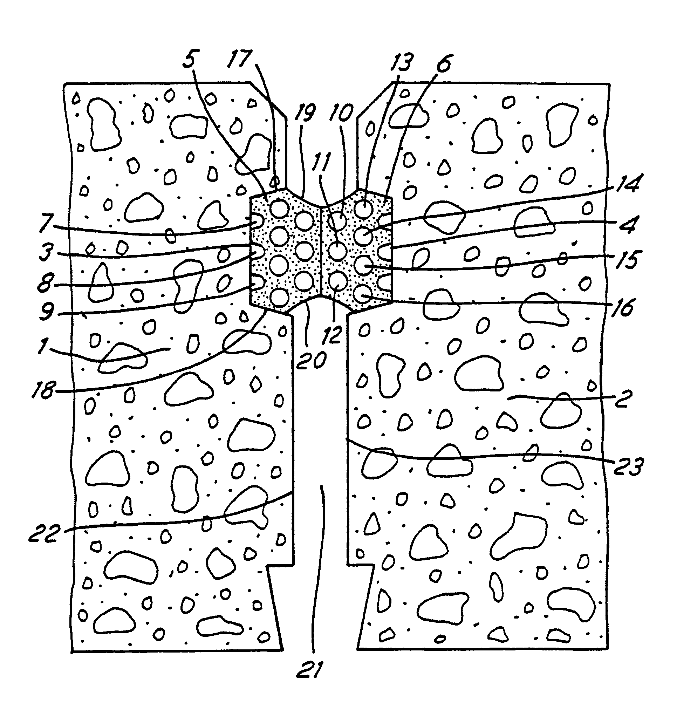

Die Erfindung wird nun in Verbindung mit einer Abbildung beispielsweise beschrieben. Die Abbildung stellt einen Querschnitt durch zwei Segmente dar, in deren Nuten erfindungsgemäße ringförmige Dichtungsprofile im noch nicht verpreßten Zustand angeordnet sind.

Die beiden Segmente (1) und (2) besitzen je eine Nut (3) bzw. (4). In diesen Nuten sind Rücken an Rücken zwei Dichtungsprofile (5) und (6) eingeklebt. Jedes dieser Dichtungsprofile weist an der Basisseite drei Rillennuten (7), (8) und (9) auf. Weiterhin besitzt das Profil sieben Kanäle (10) bis (16), die zweireihig angeordnet sind. Rillennuten und Kanäle haben untereinander nahezu den gleichen Abstand, wodurch eine nahezu gleichmäßige Wandstärke erzielt wird. Die seitlichen Flanken (17) und (18) weisen einen Winkel von 15° auf. Die Oberfläche der seitlichen Flanken (19) und (20) sind im unbelasteten Zustand leicht konkav ausgebildet. Die Breite der ebenen Rückenfläche des Profils beträgt 70 bis 80 % seiner maximalen Profilbreite.

Werden die beiden Profile (5) und (6) durch eine Verschraubung der Segmente (1) und (2) im Bereich (21) zusammengepreßt, so verlagert sich die Gummimasse in die Nuten (3) und (4) hinein. Im Endzustand beträgt der Abstand der Ränder (22) und (23) der Segmente (1) und (2) je nach Bautoleranz 0 bis 10 mm. Die oberhalb der Nut (3) bzw. (4) liegende Gummimasse wird nun weitgehend gleichmäßig so verformt, daß keine Spitzenbelastungen in der Gummimasse eintreten. Auch der Anpreßdruck zwischen den Rücken der beiden Profile (5) und (6) ist weitgehend gleichmäßig.

## Ansprüche

1. Dichtungsprofil (5,6) aus Gummi oder gummiähnlichem Werkstoff für mit einer umlaufenden Aussparung versehene Segmente (1,2), die zu einem rohrföfmigen Tunnel zusammengesetz sind, wobei das Profil gewinkelte seitliche Flanken (17,20), einen, ebenflächigen Profilrücken und in Längsrichtung verlaufende Rillennuten (7,8,9) und Kanäle (10,16) aufweist, wobei die Rillennuten an der Basisseite angeordnet sind, dadurch gekennzeichnet, daß über den Rillennuten (7, 8, 9) die Kanäle zweireihig angeordnet sind, und zwar in der Weise, daß drei dem Profilrücken zugewandte Kanäle (10, 11, 12; Reihe I) sich auf gleicher Höhe der Rillennuten befinden, während vier Kanäle (13,14, 15,16; Reihe II) versetzt zu den Rillennuten (7,8,9) bzw. zu den Kanälen (10,11,12) der Reihe 1 angeordnet sind, und daß die Kanäle innerhalb einer Reihe sowie von Reihe zu Reihe nahezu den gleichen Abstand besitzen.

2. Dichtungsprofil nach Anspruch 1, dadurch gekennzeichnet, daß die Rillennuten gleichförmig sind und die Kanäle gleichen Durchmesser aufweisen.

3. Dichtungsprofil nach den Ansprüchen 1 und 2, dadurch gekennzeichnet, daß die Oberfläche der seitlichen Flanken (19, 20) im unbelasteten Zustand leicht konkav ausgebildet ist.

4. Dichtungsprofil nach den Ansprüchen 1 bis 3, dadurch gekennzeichent, daß das Profil (5, 6) aus einer Kautschukmischung auf Basis von Polychloropren, EPDM, Nitrilkautschuk oder anderen quell-, witterungs- und chemikalienbeständigen Kautschuktypen besteht.

5. Dichtungsprofil nach den Ansprüchen 1 bis 4, dadurch gkennzeichnet, daß das Profil (5, 6) eine Härte in Shore A von 35 bis 80° aufweist.

6. Dichtungsprofil nach Anspruch 1, dadurch gekennzeichnet, daß jedes Segment (1,2) einen passenden Rahmen aus vier zusammengefügten Dichtungsprofilen erhält, wobei die vier Rahmenecken der Dichtung im Injection-Molding-Verfahren hergestellt werden.

7. Dichtungsprofil nach den Ansprüchen 1 und 6, dadurch gekennzeichnet, daß die Kanäle während des Injection-Molding-Verfahrens mit konischen Stöpseln verschlossen sind.

## Claims

1. A sealing profile (5, 6) made of rubber or rubber-like material for segments (1, 2) which are provided with a peripheral opening and which are assembled to form a tubular tunnel, where the profile comprises angled, lateral flanks (17-20), a flat-surfaced profile back and grooves (7, 8, 9) and channels (10-16) extending in the longitudinal direction, where the grooves are arranged on the base side, characterised in that above the grooves (7, 8, 9) the channels are arranged in two rows and in such manner that three channels (10, 11, 12; row I) facing towards the profile back are arranged at the same level as the grooves, whereas four channels (13, 14, 15, 16; row II) are arranged so as to be offset in relation to the grooves (7, 8, 9) and the channels (10, 11, 12) of row I, and that the channels are spaced by approximately the same distance both within one row and from row to row.

2. A sealing profile as claimed in Claim 1, characterised in that the grooves are of identical formation and the channels possess the same diameter.

3. A sealing profile as claimed in Claims 1 and 2, characterised in that the surface of the lateral flanks (19, 20) is designed to be slightly concave in the unloaded state.

4. A sealing profile as claimed in Claims 1 to 3, characterised in that the profile (5, 6) consists of a rubber mixture based on polychloroprene, EPDM, nitrile rubber or other swell-, weather- and chemical-resistant types of rubber.

5. A sealing profile as claimed in Claims 1 to 4, characterised in that the profile (5, 6) has a Shore A hardness of 35 to . 80° .

6. A sealing profile as claimed in Claim 1, characterised in that each segment (1, 2) is provided with a matching frame composed of four assembled sealing profiles, where the four corners of the frame of the seal are produced by injection moulding.

7. A sealing profile as claimed in Claims 1 and 6, characterised in that the channels are closed by conical plugs during the injection moulding process.

**Revendications**

1. Joint d'étanchéité profile (5,6) en caoutchouc ou en une matiére caoutchouteuse pour des segments (1, 2) qui, munis d'un évidement circonférentiel, sont assemblés pour former un tunnel tubulaire, ce Joint profilé comprenant des flancs latéraux (17-20) coudés, un dos de joint profilé a surface plane et des rainures (7, 8,9) et des canaux (10-16) qui s'étendent en direction longitudinale, les rainures étant disposées du côté de la base, caractérisé en ce que les canaux sont disposés en deux rangées au dessus des rainures (7,8, 9), et de manière que trois canaux (10,11,12); rangée I) situés du côté du dos de joint profilé se trouvent à la même hauteur que les rainures tandis que quatre canaux (13,14,15,16; rangée II) sont disposés décalés par rapport aux rainures (7,8,9) ou aux canaux (10, 11, 12) de la rangée I et en ce que les canaux sont séparés à peu près par la même distance à l'intérieur d'une rangée, ainsi que d'une rangée à l'autre.

2. Joint d'étanchéité profilé selon la revendication 1, caractérisé en ce que les rainures ont la même forme et les canaux le même diamètre.

3. Joint d'étanchéité profilé selon la revendication 1 ou 2, caractérisé en ce que la surface des flancs latéraux (19, 20) a, à l'état non chargé, une forme légèrement concave.

4. Joint d'étanchéité profilé selon l'une quelconque des revendications 1 à 3, caractérisé en ce que le joint profilé (5,6) est fait d'un mélange de caoutchoucs à base de polychloroprène, d'EPDM, de caoutchouc nitrile ou d'autres types de caoutchoucs résistants au gonflement et stables aux agents atmosphériques et aux produits chimiques.

5. Joint d'étanchéité profité selon l'une quelconque des revendications 1 a 4, caractérisé en ce que le joint profilé (5,6) présente une dureté Shore A de 35 à 80°.

6. Joint d'étanchéité profilé selon la revendication 1. caractérisé en ce que chaque segment (12) reçoit un cadre approprié, formé de quatre joints d'étanchéité assemblés, les quatre angles de cadre de la garniture d'étanchéité étant fabriqués par le procédé de moulge par injection.

7. Joint d'étanchéité profité selon la revendication 1 ou 6, caractérisé en ce que pendant l'opération de moulage par injection, les canaux sont obturés par des bouchons coniques.